# EUROPEAN PATENT APPLICATION

(11) **EP 2 557 246 A2**
(43) Date of publication of application: **13.02.2013**
(21) Application number: 12275090.4
(22) Date of filing: 12.06.2012
(51) Int. Cl.: E04B 1/80, B62D 33/04

(54) **Improvements in relation to Insulated Articles**

(30) Priority: 09.08.2011 GB 201113679
(71) Applicant: Barkston Limited, Leeds, Yorkshire LS9 0DX (GB)
(72) Inventor: Carter, Mark, Leeds, Yorkshire LS9 0DX (GB); Cowling, Paul, Leeds, Yorkshire LS9 0DX (GB)
(74) Representative: Smithson, Robert Alan

(57) **Abstract**

An insulated article, the article comprising at least one first skin formed from a plastic sheet, and at least one second skin formed from a plastic sheet, the at least one first skin and the at least one second skin being held relative to each other in a multiple skinned arrangement by one or more plastic spacing elements, wherein the plastic spacing element comprises one of mechanical engagement means or an engaging portion and the at least one first skin or the at least one second skin comprises the other of mechanical engagement means or an engaging portion, wherein the mechanical engagement means is operable to mechanically engage the engaging portion.

## Description

The present invention relates to improvements in relation to insulated articles. Particularly, the present invention relates to improvements in relation to insulated articles formed from plastic sheets, and to a method of constructing such insulated articles.

Insulated articles are known in the art and often employ the use of multiple skinned construction to provide a void between the skins to provide insulation (via the addition of an insulating material, such as a foam or gas or by introducing a vacuum into the space). Such multiple skinned constructions usually comprise one or more spacing member between the skins to hold the skins at a predetermined distance apart and thereby rigidly define an interstitial void.

In articles formed from plastic, it is known to use a plastic ribs or pins between the skins and weld them together to make the structure rigid and thereby make the interstitial void rigidly defined.

However, such an arrangement either requires the skill and aptitude of a technician to ensure that the plastic weld is of sufficient quality and strength, or the use of expensive automated welding machinery to achieve the result. Furthermore, the use of plastic welding can cause the welded joint to become weak and liable to mechanical failure.

It is an object of aspects of the present invention to provide a solution to the above mentioned or other problems. In particular, it is an object of aspects of the present invention to provide an insulated article formed of plastics material that is strong and less liable to mechanical failure, and also easy to construct.

According to a first aspect of the invention there is provided an insulated article, the article comprising at least one first skin comprising a plastic sheet, and at least one second skin comprising a plastic sheet, the at least one first skin and the at least one second skin being held relative to each other in a multiple skinned arrangement by one or more plastic spacing elements, wherein the or each plastic spacing element comprises one of mechanical engagement means or an engaging portion and the at least one first skin or the at least one second skin comprises the other of mechanical engagement means or an engaging portion, wherein the mechanical engagement means is operable to mechanically engage the engaging portion.

Preferably, the insulated article comprises an insulated sheet. Preferably, the insulated article comprises a number of insulated sheets, which may be joined together to form a complex article. One such article is a refrigeration container, for example, for use in transport.

References herein to plastic refer to thermoset or thermoplastic plastic materials. Plastic as referred to herein may comprise any suitable plastic material, such as one or more of the following: polyethylene, polypropylene, PMMA, ABS, PVC, PVC foam polystyrene.

Preferably, the mechanical engagement means is located on the plastic spacing element.

Preferably, the mechanical engagement means comprises a projection, preferably comprising hooking means thereon. The hooking means may comprise a first hooking member and, preferably a second hooking member. The mechanical engagement means may comprise a projection which is substantially "T" shape in cross section.

Preferably, the engaging portion is located on the at least one first skin or the at least one second skin.

Preferably, the engaging portion comprises a slot. Preferably, the slot is adapted and operable to receive the mechanical engagement means of the plastic spacing element. The slot is preferably operable to receive and retain hooking means of the mechanical engagement means. The slot may be substantially "T" shaped in cross section.

The engaging portion, which may be a slot, preferably extends substantially across the plastic spacing element or substantially across the at least one first skin or the at least one second skin. Preferably, the engaging portion, which may be a slot, preferably extends more than 80% along the length of the plastic spacing element or more than 80% across the at least one first skin or the at least one second skin

Preferably, the insulated article comprises a first mechanical engagement means and a second mechanical engagement means. Preferably, the insulated article comprises a first engaging portion and a second engaging portion.

The first mechanical engagement means and second mechanical engagement means are preferably operable to mechanically engage with a first engaging portion and a second engaging portion. The first mechanical engagement means and second mechanical engagement means may be situated on the plastic spacing element or on the at least one first skin or the at least one second skin, but preferably on the plastic spacing element.

Preferably, the first engaging portion is situated on the at least one first skin. Preferably, the second engaging portion is situated on the at least one second skin

The first mechanical engagement means and the second mechanical engagement means may each, independently, comprise the preferred features of the mechanical engagement means referred to herein.

The first engaging portion and the second engaging portion may each, independently, comprise the preferred features of the engaging portion referred to herein.

In a preferred embodiment, the plastic spacing element comprises a longitudinal axis, which longitudinal axis preferably, in use, extends generally parallel to a plane of the at least one first skin or the at least one second skin. Preferably, the mechanical engagement means or the engaging portion, as appropriate, extends along the longitudinal axis of the plastic spacing element, preferably along an edge thereof.

In a particularly preferred embodiment, the plastic spacing element comprises first mechanical engagement means and second mechanical engagement means which both, preferably, extend generally along the longitudinal axis thereof and most preferably along edges thereof, preferably opposite edges thereof.

The plastic spacing element may comprise an uneven surface to prevent slippage of insulation pressed thereagainst, in use. The uneven surface may comprise a number of raised sections, which raised sections preferably extend substantially across a width of the plastic spacing element.

The width of the plastic spacing element may be defined as an axis generally perpendicular to the longitudinal axis thereof.

The raised sections may be situated on a single face of the plastic spacing element, or may be on more than one surface. In one embodiment, opposite faces of the plastic spacing element may comprise an uneven surface, thus the raised sections may be situated on opposite faces of the plastic spacing element.

The article may further comprise an insulating material between the at least one first skin and the at least one second skin. Examples of insulating material include heat insulation or sound insulating material. Examples of commercially available insulating materials include Dow Styrofoam RTM, Dow Styrofoam LB-X, for example.

In an especially preferred embodiment, the insulated article may form a part of a refrigeration container for use on a vehicle. Therefore according to one aspect of the present invention there is provided a refrigeration container for use on a vehicle comprising an insulated article according to the first aspect.

According to a further aspect of the present invention, there is provided a vehicle comprising a refrigeration container, the refrigeration container comprising an insulated article according to the first aspect.

According to a further aspect of the present invention, there is provided a method of forming an insulated article, the method comprising:
connecting at least a first skin formed from a plastic sheet and at least a second skin formed from a plastic sheet via a plastic spacing element by mechanically engaging mechanical engagement means of the plastic spacing element or of the at least one first skin or the at least one second skin with an engaging portion of the other of the plastic spacing element or of the at least one first skin or the at least one second skin.

The method may further comprise the addition of an insulating material between the at least one first skin and the at least one second skin.

All of the features contained herein may be combined with any of the above aspects and in any combination.

For a better understanding of the invention, and to show how embodiments of the same may be carried into effect, reference will now be made, by way of example, to the accompanying diagrammatic drawings in which:
Figure 1 shows a perspective view of a dual skinned insulated article;
Figure 2 shows a sectional view of the dual skinned insulated article;
Figure 3 shows a plan view of a plastic spacing element; and
Figure 4 shows a side view of the plastic spacing element.

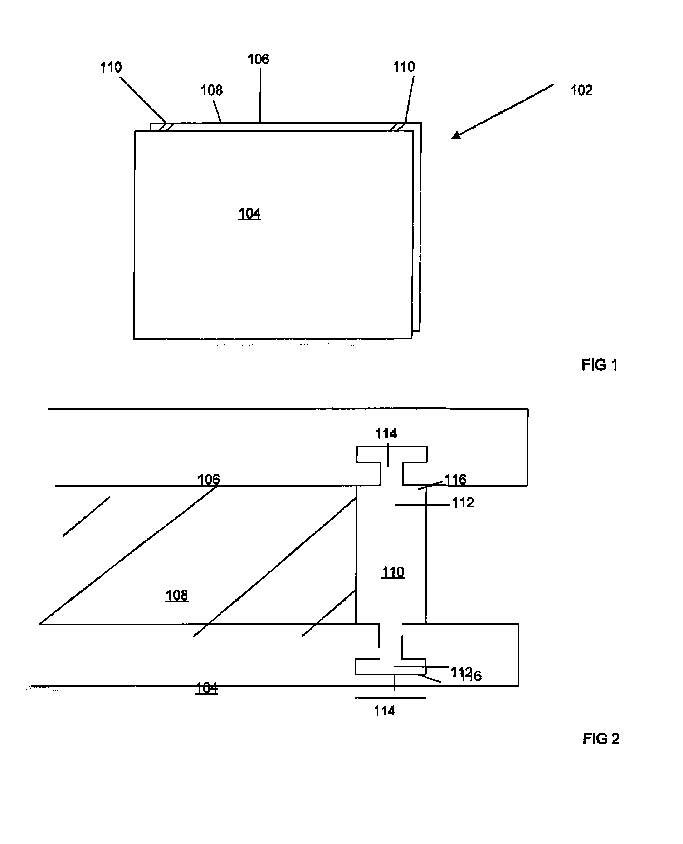

Referring to figure 1 there is shown a perspective view of a dual skinned insulated article 102 according to the invention. The dual skinned article comprises a first skin 104, being a generally rectangular sheet, and a second skin 106, being a similarly sized and shaped generally rectangular sheet. The skins 104, 106 are formed from a plastic material, such as polypropylene.

The sheets 104, 106 are held apart by two spacing elements 110, which will be described in more detail hereunder. Held between the two sheets 104, 106 is a layer of insulating material 108. The insulating material may be any insulating material suited to the use of the article. For example, the insulating material may be Styrofoam, styrene, rockwool or polyurethane foam.

Referring now to figure 2 there is shown a cross sectional view of the dual skinned article 102 comprising the first and second skin 104, 106, the layer of insulating material 108 and the plastic spacing element 110. The spacing element 110 comprises a body section and a pair of engaging sections 114 at opposite ends of the body section, which engage with similarly shaped and sized slots in the skins 104, 106. In more detail, the engaging sections 114 comprise a neck section 112 and a head section 116. The head section 116 comprises a pair of outwardly extending ears. In this manner, the engaging sections 114 are generally "T" shaped in cross section and are received in corresponding "T" shaped slots in the skins 104, 106.

In order to construct a dual skinned insulated article 102 as shown in figures 1 and 2, a plastic spacing element is fitted between two skins 104, 106 by sliding the engaging sections 114 into the slots in the skins 104, 106, thereby locking the article 102 together in a dual skin arrangement. Insulating material 108 may then be added to the article, as required.

It will be appreciated by a person skilled in the art that an article such as that described above in relation to figures 1 and 2 may have more than 2 skins. In fact, the article may have 3, 4 or more skins, which may all be held in a multiple skin relationship by plastic spacing elements locking the skins together as discussed above.

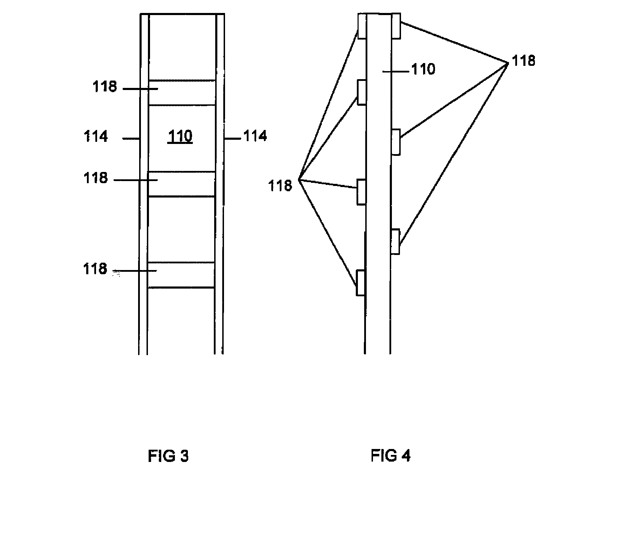

Referring now to figure 3 there is shown a plan view of a spacing element 110, having the engaging sections 114 running down the sides thereof. Extending across the width of the spacing element 110 is a number of slightly raised rib sections 118. The rib sections 118 are spaced generally parallel with each other, but at different heights across the width of the spacing element 110. The rib sections 118 can be seen in more detail with reference to figure 4, which shows a side view of the spacing element 110. As is clearly shown in figure 4, the rib sections 118 are raised slightly from the surface of the spacing element 110, at opposite sides thereof and at alternating positions down the length of the spacing element 110.

In use, the rib sections 118 are operable to contact the insulating material and, because the ribs break up an otherwise planar surface, prevent the insulating material from moving between the skins 104, 106.

A multiple skinned article made in accordance with the present invention has the advantage that it is easy to manufacture and very easy to construct because the engagement between the skins and the spacing element is easily mechanically achieved without the need for welding. This means that the cost of producing these articles is significantly lower than those of the prior art.

Furthermore, the provision of rib sections to prevent the movement of insulation material is advantageous in that it prevents insulation material moving and thus prevents "dead spots" where there is a lack of insulation.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An insulated article, the article comprising at least one first skin formed from a plastic sheet, and at least one second skin formed from a plastic sheet, the at least one first skin and the at least one second skin being held relative to each other in a multiple skinned arrangement by one or more plastic spacing elements, wherein the plastic spacing element comprises one of mechanical engagement means or an engaging portion and the at least one first skin or the at least one second skin comprises the other of mechanical engagement means or an engaging portion, wherein the mechanical engagement means is operable to mechanically engage the engaging portion.

2. An insulated article according to claim 1, wherein the insulated article comprises an insulated sheet.

3. An insulated article according to either of claim 1 or claim 2, wherein the mechanical engagement means is located on the plastic spacing element.

4. An insulated article according to any preceding claim, wherein the mechanical engagement means comprises a projection, preferably comprising hooking means thereon.

5. An insulated article according to any preceding claim, wherein the mechanical engagement means may comprise a projection which is substantially "T" shape in cross section.

6. An insulated article according to any preceding claim, wherein the engaging portion is located on the at least one first skin or the at least one second skin.

7. An insulated article according to any preceding claim, wherein the engaging portion comprises a slot.

8. An insulated article according to claim 7, wherein the slot is adapted and operable to receive the mechanical engagement means of the plastic spacing element.

9. An insulated article according to any preceding claim, wherein the slot is substantially "T" shaped in cross section.

10. An insulated article according to any preceding claim, wherein the insulated article comprises a first mechanical engagement means and a second mechanical engagement means.

11. An insulated article according to claim 10, wherein the first mechanical engagement means and a second mechanical engagement means are operable to mechanically engage with a first engaging portion and a second engaging portion.

12. An insulated article according to any preceding claim, wherein the plastic spacing element comprises a longitudinal axis, which longitudinal axis preferably, in use, extends generally parallel to a plane of the at least one first skin or the at least one second skin.

13. An insulated article according to claim 12, wherein the mechanical engagement means or the engaging portion, as appropriate, extends along the longitudinal axis of the plastic spacing element and wherein the plastic spacing element comprises first mechanical engagement means and second mechanical engagement means which both extend generally along the longitudinal axis thereof.

14. An insulated article according to any preceding claim, wherein the plastic spacing element may comprise an uneven surface to prevent slippage of insulation pressed thereagainst.

15. A method of forming an insulated article, the method comprising connecting at least a first skin formed from a plastic sheet and at least a second skin formed from a plastic sheet via a plastic spacing element by mechanically engaging mechanical engagement means of the plastic spacing element or of the at least one first skin or the at least one second skin with an engaging portion of the other of the plastic spacing element or of the at least one first skin or the at least one second skin.
